# EUROPÄISCHE PATENTANMELDUNG

(11) **EP 3 594 516 A1**
(43) Veröffentlichungstag der Anmeldung: **15.01.2020**
(21) Anmeldenummer: 18182442.6
(22) Anmeldetag: 09.07.2018
(51) Int. Cl.: F16C 17/24, F16C 33/10, F16C 17/02, F16C 17/04

(54) **VERFAHREN ZUM BETREIBEN EINES GLEITLAGERS**

(71) Anmelder: Siemens Aktiengesellschaft, 80333 München (DE)
(72) Erfinder: Hofmann, Andreas, 91466 Gerhardshofen (DE)

(57) **Zusammenfassung**

Die Erfindung betrifft ein Verfahren zum Betreiben eines Gleitlagers (4, 5, 6), wobei das Gleitlager (4, 5, 6) mit Öl als Schmiermedium versorgt wird, wobei die Zuführung der Menge des Schmiermediums in das Gleitlager (4, 5, 6) geregelt wird, wobei eine Automatisierungseinheit (8) die Zuführmenge regelt und als Eingangsgrößen beispielsweise die Lagertemperatur des Gleitlagers (4, 5, 6) verwendet.

## Beschreibung

Die Erfindung betrifft ein Verfahren zum Betreiben eines Gleitlagers, wobei das Gleitlager zur Lagerung eines drehbaren Rotors ausgebildet wird, wobei das Gleitlager mit einer Lagerschale ausgebildet wird, in die der Rotor gelagert wird, wobei zwischen dem Rotor und der Lagerschale ein Schmierfilm aus einem Schmiermedium zugeführt wird.

Gleitlager werden beispielsweise dazu verwendet, Rotoren von beispielsweise Dampf-, Gasturbinen oder Verdichter sowie Generatoren zu lagern. In einem Gleitlager dreht sich der gleitgelagerte Rotor auf einem Schmierfilm in einer Lagerschale. Allerdings kann es bei einem Gleitlager zu einer Verlustleistung kommen, die durch Reibung verursacht wird. Die Reibverluste ergeben sich dabei über die Radial- und Axiallagerung. Der Schmierfilm umfasst ein Schmiermedium, wobei in der Regel Öl verwendet wird. Über Ölpumpen wird das Öl dem Gleitlager ständig zugeführt. Über Auslasskanäle wird das Öl auch aus dem Gleitlager herausgeführt. Die Zuführung mit Öl ist derart ausgebildet, dass das Gleitlager im Grunde mit Öl überversorgt ist, damit die Reibpartner, die Rotor- und Lagerschale, nicht direkt aufeinanderreiben. Die Überversorgung mit Öl ist bedingt durch die Tatsache, dass Mangelschmierungszustände des Gleitlagers nur näherungsweise simuliert werden können, insbesondere der Einfluss der Mangelschmierung auf die dynamischen Lagereigenschaften, wie z. B. bei Wellenschwingungen. Desweiteren ist die Überversorgung mit Öl auch dadurch bedingt, dass die Rotoren bei verschiedenen Lastzuständen belastet werden.

In der Regel wird pro Gleitlager ein Schmiermediumzufluss ausgebildet. Dabei wird gemäß dem Stand der Technik die Menge an Schmiermedium fest eingestellt und ist daher nicht variabel.

Wünschenswert wäre es, eine verbesserte Ausführung eines Gleitlagers zu erhalten.

Aufgabe der Erfindung ist es, ein verbessertes Gleitlager anzugeben.

Gelöst wird diese Aufgabe durch ein Verfahren zum Betreiben eines Gleitlagers, wobei das Gleitlager zur Lagerung eines drehbaren Rotors ausgebildet wird, wobei das Gleitlager mit einer Lagerschale ausgebildet wird, in die der Rotor gelagert wird, wobei zwischen dem Rotor und der Lagerschale ein Schmierfilm aus einem Schmiermedium zugeführt wird, wobei die Zuführung des Schmiermediums geregelt wird.

Die Erfindung folgt dem Ansatz, den Zufluss des Schmiermediums variabel zu gestalten. Das bedeutet, dass der Zufluss des Schmiermediums zu dem Gleitlager geregelt wird. Dies erfolgt vor allem vor dem Hintergrund, Reibverluste und den Öldurchsatz zu reduzieren. Dabei wird pro Lagerstelle ein separater Ölzulauf und idealerweise auch ein separater Ölablauf angeordnet. Die Menge des Schmiermediums wird dabei geregelt, was durch einstellbare Drosseln erfolgen kann.

Vorteilhafte Weiterbildungen sind in den Unteransprüchen angegeben.

So wird in einer ersten vorteilhaften Weiterbildung die Zuführung des Schmiermediums lastabhängig geregelt. Vorteilhafterweise werden die Reibverluste des Gleitlagers ermittelt und die Regelung derart ausgebildet, dass die Zuführung des Schmiermediums derart erfolgt, dass die Reibverluste minimiert werden.

Vorteilhafterweise wird die Lagertemperatur des Gleitlagers ermittelt und die Regelung der Zuführung des Schmiermediums derart ausgeführt, dass eine Maximaltemperatur des Gleitlagers nicht überschritten wird.

In einer weiteren vorteilhaften Weiterbildung befindet sich das Schmiermedium in einem Schmiermediumtank, wobei die Schmiermediumtemperatur ermittelt wird und die Regelung der Zuführung des Schmiermediums derart erfolgt, dass eine Maximaltemperatur des Schmiermediums nicht überschritten wird.

In einer weiteren vorteilhaften Weiterbildung werden die Schwingungen des Rotors ermittelt und die Regelung der Zuführung des Schmiermediums erfolgt dabei derart, dass die Rotorschwingungen unter einem Grenzwert bleiben.

Vorteilhafterweise erfolgt die Zuführung des Schmiermediums über eine Drossel. Bei einem Axiallager ist mit je einer einstellbaren Ölzuführung für die beiden Lagerseiten getrennt auszuführen.

Die Aufgabe wird auch gelöst durch ein Automatisierungssystem, das zum Durchführen des obigen Verfahrens ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

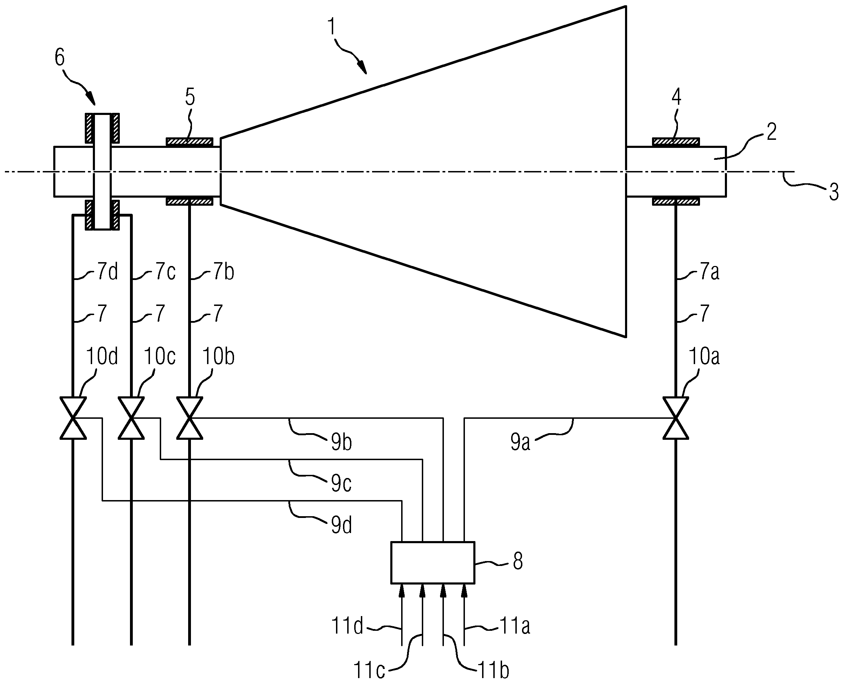

Gleiche Bauteile oder Bauteile mit gleicher Funktion sind dabei mit gleichen Bezugszeichen gekennzeichnet. Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigt:
Figur: eine schematische Darstellung eines gleitgelagerten Rotors einer Strömungsmaschine

Die Figur zeigt eine Strömungsmaschine 1. Die Strömungsmaschine 1 kann beispielsweise eine Dampfturbine, eine Gasturbine oder ein Verdichter sein. Die Strömungsmaschine umfasst einen Rotor 2, der um eine Rotationsachse 3 drehbar gelagert ist. Die Lagerung erfolgt hierbei an dem einen Ende der Strömungsmaschine 1 mittels eines ersten Gleitlagers 4. An dem anderen Ende der Strömungsmaschine ist ein zweites Gleitlager 5 angeordnet.

Das erste Gleitlager 4 und das zweite Gleitlager 5 sind als Radiallager ausgebildet. Neben dem zweiten Gleitlager 5 ist ein Axiallager 6, was auch als Gleitlager ausgeführt ist, angeordnet. Das erste Gleitlager 4, das zweite Gleitlager 5 und das Axiallager 6 sind im Wesentlichen derart ausgebildet, dass diese eine nicht näher dargestellte Lagerschale umfassen. Zwischen der Lagerschale und dem Rotor 2 ist ein Schmiermedium angeordnet, was in diesem Fall Öl ist. Das Öl wird über eine nicht näher dargestellte Ölversorgung über Ölleitungen 7 dem Gleitlager zugeführt.

So wird dem ersten Gleitlager 4 über eine erste Ölleitung 7a, dem zweiten Gleitlager 5 über eine zweite Ölleitung 7b und dem Axiallager über eine erste axiale Ölleitung 7c und eine zweite axiale Ölleitung 7d Öl zugeführt.

Die Zuführung des Schmiermediums, hier Öl, wird geregelt. Die Regelung kann ein Automatisierungssystem mit einer zentralen Automatisierungseinheit 8 übernehmen. Die zentrale Automatisierungseinheit 8 ist über Steuerleitungen 9a mit einer ersten Drossel 10a verbunden. Die Regelung der Menge des Öls als Schmiermedium in die erste Ölleitung 7a wird mit der zentralen Automatisierungseinheit geregelt. In ähnlicher Weise wird eine zweite Steuerleitung 9b mit einer zweiten Drossel 10b verbunden. Die zweite Drossel 10b regelt den Zufluss des Öls zum zweiten Gleitlager 5.

Ebenso in ähnlicher Weise wird das Axiallager 6 mit Öl versorgt, deren Ölzuflussmengen durch die zentrale Automatisierungseinheit 8 geregelt wird, wobei eine dritte Steuerleitung 9c mit einer dritten Drossel 10c und eine vierte Steuerleitung 9d mit einer vierten Drossel 10d verbunden ist. Die Ölmengen durch die Leitungen 7c und 7d werden durch die Drosseln 10c und 10d geregelt.

Die zentrale Automatisierungseinheit 8 benötigt für eine erfolgreiche Regelung Informationen, die über Informationsleitungen 11a, 11b, 11c und 11d an die zentrale Automatisierungseinheit 8 geführt werden. So kann über die eine der Informationsleitungen 11a - 11d der aktuelle Lastpunkt am Gleitlager der Automatisierungseinheit zugeführt werden. Der aktuelle Lastpunkt muss dabei ermittelt werden. Genauso werden Reibverluste des Gleitlagers ermittelt und über die Informationsleitung 11a - 11d der zentralen Automatisierungseinheit zugeführt. Eine weitere Information, die für eine ideale Betriebslast des Gleitlagers führt, wäre die Lagertemperatur des Gleitlagers, die ebenso ermittelt werden sollte und der zentralen Automatisierungseinheit über die Informationsleitungen 11a - 11d zugeführt werden sollte. Dabei wird die Regelung derart ausgeführt, dass eine Maximaltemperatur des Gleitlagers nicht überschritten wird.

Das Schmiermedium befindet sich in einem nicht näher dargestellten Schmiermediumtank. Erfindungsgemäß wird die Schmiermediumtemperatur ermittelt und die Regelung der Zuführung des Schmiermediums derart ausgeführt, dass eine Maximaltemperatur des Schmiermediums nicht überschritten wird. Ebenso werden Schwingungen des Rotors ermittelt und über die Informationsleitungen 11a - 11d der zentralen Automatisierungseinheit zugeführt. Die zentrale Automatisierungseinheit 8 regelt die Zuführung des Schmiermediums durch die Drosseln 10a - 10d.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Gleitlagers (4, 5, 6), wobei das Gleitlager (4, 5, 6) zur Lagerung eines drehbaren Rotors (2) ausgebildet wird,
wobei das Gleitlager (4, 5, 6) mit einer Lagerschale ausgebildet wird, in die der Rotor (2) gelagert wird,
wobei zwischen dem Rotor und der Lagerschale ein Schmierfilm aus einem Schmiermedium zugeführt wird,
**dadurch gekennzeichnet, dass**
die Zuführung des Schmiermediums geregelt wird.

2. Verfahren nach Anspruch 1,
wobei die Zuführung des Schmiermediums lastabhängig erfolgt.

3. Verfahren nach Anspruch 1 oder 2,
wobei Reibverluste des Gleitlagers (4, 5, 6) ermittelt werden und die Regelung der Zuführung des Schmiermediums derart erfolgt, dass die Reibverluste minimiert werden.

4. Verfahren nach Anspruch 1,2 oder 3,
wobei eine Lagertemperatur des Gleitlagers (4, 5, 6) ermittelt wird und die Regelung der Zuführung des Schmiermediums derart erfolgt, dass eine Maximaltemperatur T_{max, Gleit} des Gleitlagers (4, 5, 6) nicht überschritten wird.

5. Verfahren nach einem der vorhergehenden Ansprüche, wobei das Schmiermedium in einem Schmiermediumtank sich befindet und die Schmiermediumtemperatur ermittelt wird und die Regelung der Zuführung des Schmiermediums derart erfolgt, dass eine Maximaltemperatur T_{max, Schmiermedium} des Schmiermediums nicht überschritten wird.

6. Verfahren nach einem der vorhergehenden Ansprüche, wobei Schwingungen des Rotors (2) ermittelt werden und die Regelung der Zuführung des Schmiermediums derart erfolgt, dass die Rotorschwingungen unter einem Grenzwert bleiben.

7. Verfahren nach einem der vorhergehenden Ansprüche, wobei die Zuführung des Schmiermediums über eine Drossel (10a, 10b, 10c, 10d) erfolgt.

8. Verfahren nach einem der vorhergehenden Ansprüche, wobei das Lager als Axiallager (6) ausgebildet wird.

9. Verfahren nach einem der vorhergehenden Ansprüche, wobei das Lager als Radiallager (4, 5) ausgebildet wird.

10. Verfahren nach einem der vorhergehenden Ansprüche, wobei als Schmiermedium Öl verwendet wird.

11. Verfahren nach einem der vorhergehenden Ansprüche, wobei die Zuführung des Schmiermediums über Pumpen erfolgt.

12. Verfahren nach einem der vorhergehenden Ansprüche, wobei bei der Zuführung des Schmiermediums die zugeführte Menge des Schmiermediums geregelt wird.

13. Automatisierungssystem zur Durchführung eines Verfahrens nach einem der Ansprüche 1 bis 11.
